Europäisches Patentamt

European Patent Office

Office européen des brevets

(19)

(11) Veröffentlichungsnummer : **0 248 042 B1**

# (12) EUROPÄISCHE PATENTSCHRIFT

(45) Veröffentlichungstag der Patentschrift :
11.10.89

(21) Anmeldenummer : 86906754.6

(22) Anmeldetag : 03.12.86

(86) Internationale Anmeldenummer :
PCT/CH 86/00169

(87) Internationale Veröffentlichungsnummer :
WO/8703656 (18.06.87 Gazette 87/13)

(51) Int. Cl.$^4$ : **F 16 B 13/04, F 16 B 13/12**

(54) KUNSTSTOFFSPREIZDÜBEL.

(30) Priorität : 05.12.85 CH 5217/85

(43) Veröffentlichungstag der Anmeldung :
09.12.87 Patentblatt 87/50

(45) Bekanntmachung des Hinweises auf die Patenterteilung : 11.10.89 Patentblatt 89/41

(84) Benannte Vertragsstaaten :
AT BE CH DE FR GB IT LI NL

(56) Entgegenhaltungen :
DE—A— 1 400 825
DE—A— 1 813 812
DE—A— 2 604 319
DE—C— 3 208 347
FR—A— 2 367 934
GB—A— 2 051 995
US—A— 3 522 756

(73) Patentinhaber : Vereinigte Drahtwerke AG
Neumarktstrasse 33
CH-2501 Biel (CH)

(72) Erfinder : ROGGER, Alphons
Subergstrasse 196x
CH-3257 Grossaffoltern (CH)
Erfinder : ROGGER, Marcel
Im Rogger-Stöckli
CH-3257 Grossaffoltern (CH)
Erfinder : BUZZI, Carlo, A.
Stauffacherstrasse 98
CH-8004 Zürich (CH)

(74) Vertreter : White, William et al
PATENTANWALTS-BUREAU ISLER AG Postfach 6940
Walchestrasse 23
CH-8023 Zürich (CH)

EP 0 248 042 B1

## Beschreibung

Ein Dübel gemäss Oberbegriff des Anspruchs 1 ist aus der DE-A-1 400 825 bekannt. Dieser Dübel besteht aus einem Schaft und einem Spreizelement, an welchem ein Sicherungselement in Form zweier mit einer Wurzel am Spreizelement befestigter, radial federnd abstehender, in Umfangsrichtung biegesteifer, gegen das freie Ende des Schaftes gerichteter Zungen angeformt ist.

Ein weiterer Dübel gemäss Oberbegriff des Anspruchs 1 ist aus der DE-A-2 604 319 bekannt. Hier sind die Sicherungselemente radial abstehende federnde Zungen, deren eines Ende am Spreizelement befestigt ist. Um ein Verdrehen der Sicherungselemente relativ zum Dübel beim Durchdrehen des Dübels im Bohrloch zu verhindern, stützen sich diese Sicherungselemente in Umfangsrichtung an einer Schulter einer Längsnut ab.

Bei einem weiteren bekannten Dübel (GB-A-2 051 995) sind die Sicherungselemente in Längsnuten des Schaftes federnd eingeschwenkte Flügelstücke. Eine ähnliche Lösung zeigt DE-A-1 813 812. In dieser Schrift ist als Variante auch noch ein spiralkegelförmig am Schaft angeformter Flügel beschrieben.

Bei all diesen Dübeln wird das Sicherungselement durch seine Federwirkung radial gegen die Bohrlochwand angepresst. Es muss deshalb relativ kurz und axial gegen das freie Ende des Schaftes gespreizt sein. Um ein Durchdrehen des Sicherungselementes gegenüber dem Dübel zu verhindern, ist es bei DE-A-1 400 825 in Umfangsrichtung biegesteif ausgebildet. In den andern erwähnten Fällen stützt es sich in Umfangsrichtung gegen den Schaft ab.

Die von den Spreizelementen in Richtung des Schaftes federnd abstehenden kurzen Sicherungselemente der bekannten Dübel dienen als schwache Drehsicherung, bis die Spreizelemente beim Einschrauben der Schraube soweit voneinander gespreizt sind, dass sie an den Wänden des Bohrlochs greifen. Bei weichem oder stark porösem Gestein, z. B. Tuffstein, Schaumbeton, Ziegelstein, kommt es aber vor, dass diese Sicherungselemente beim Einführen der Dübel zufällig in Hohlräume gelangen und damit ihre Wirkung verlieren. Die Schraube kann dann kaum angezogen werden, weil der Dübel mitdreht. Ausserdem können solche Dübel unter diesen Umständen nur schwer wieder aus dem Bohrloch entfernt und durch andere Dübel ersetzt werden, weil die Sicherungselemente als Widerhaken wirken.

Der vorliegenden Erfindung liegt die Aufgabe zugrunde, einen Dübel gemäss Oberbegriff des Anspruchs 1 so weiter zu bilden, dass obige Nachteile vermieden werden. Diese Aufgabe wird durch die kennzeichnenden Merkmale des Anspruchs 1 gelöst.

Wegen ihrer Länge wirken beim erfindungsgemässen Dübel die Sicherungselemente nicht durch Federwirkung, sondern sie werden, falls der Dübel beim Einschrauben der Schraube mitdrehen sollte, um den Dübelkörper herum aufgewickelt. Der dabei entstehende Knäuel verkeilt sich zwischen Dübelkörper und Bohrloch, so dass der Dübel arretiert wird und die Schraube eingeschraubt werden kann. Diese Wirkung tritt bereits bei glatten Bohrlöchern auf, ist jedoch noch stärker in porösem weichem Gestein. Da die Sicherungselemente nicht als Widerhaken wirken, kann der Dübel bequem wieder aus dem Bohrloch herausgezogen werden, wenn z. B. das Bohrloch zuwenig tief ist oder der Dübel ersetzt werden sollte. Falls die Sicherungselemente den Dübelkörper überragen, kann der Dübel beim Anziehen der Schraube an den Sicherungselementen zurückgehalten werden, wenn das Bohrloch in einer blinden Höhlung endet, so dass der Dübel beim Anziehen der Schraube nicht zu weit ins Bohrloch hineinrutscht. Dies kommt bei herkömmlichen Dübeln öfters vor und führt dann zu ungenügend verankerten Schrauben.

Nachfolgend werden Ausführungsbeispiele der Erfindung anhand der Zeichnung erläutert. Darin zeigt :

Fig. 1 einen Axialschnitt durch einen Dübel,

Fig. 2 eine Stirnansicht des Dübels nach Fig. 1 in Richtung II,

Fig. 3 eine Variante der Ausführungsform nach Fig. 1 und 2,

Fig. 4 eine weitere Ausführungsform im Axialschnitt, und

Fig. 5 eine Variante der Ausführungsform nach Fig. 4.

Der dargestellte Dübel hat einen zylindrischen Schaft 1 mit einer Bohrung 6 zur Aufnahme des Schraubenschaftes und zwei einstückig am Schaft 1 angeformte Spreizelemente 2 mit einer engeren Bohrung 8 zum Einschrauben der Schraube. Die Spreizelemente 2 sind durch einen Schlitz 7 voneinander getrennt. Sie haben an ihrem Aussenumfang Umfangsnuten 9 zur sicheren Verankerung im Bohrloch. An jedem der Spreizelemente 2 ist einstückig ein bandförmiges Sicherungselement 3 angeformt, das über das freie Ende 5 des Schaftes 1 vorsteht.

Damit die Sicherungselemente 3 den Aussenumfang 11 des Dübels nicht überragen, und dementsprechend der Dübel satt in eine passende Bohrung eingesetzt werden kann, hat der Dübel zwei längsverlaufende Ausnehmungen 10 zwischen der Wurzel 4 der Sicherungselemente 3 und dem freien Ende 5 des Schaftes 1. Die Ausnehmungen 10 gehen keilförmig in den Aussenumfang 11 über. Dadurch wird erreicht, dass sich die Sicherungselemente 3 beim Durchdrehen des Dübels zunächst zwischen dem Aussenumfang 11 und dem Bohrloch verkeilen.

Es gibt Anwendungsfälle, in welchen der Dübel nicht bündig mit dem Rand des Bohrlochs eingesetzt zu werden braucht, z. B. wenn das zu befestigende Teil von der Wand beabstandet ist. Für solche Anwendungsfälle hat der Dübel an seinem Schaft 1 mehrere Längenmarkierungen 12. Mittels dieser Längenmarkierungen kann die erforderliche Schraubenlänge abgelesen werden, so dass es nicht erforderlich ist, das Bohrloch auf eine bestimmte Tiefe zu bohren.

Die Spreizelemente 2 laufen vorn spitz zu. Diese Ausbildung ermöglicht ein Durchstecken des Dübels durch weiches Material, z. B. eine Mineralfaserisolierung, in ein dahinter liegendes Bohrloch.

Um den Reibungswiderstand der Sicherungselemente 3 im Bohrloch zu erhöhen, können diese Quernoppen 13 aufweisen.

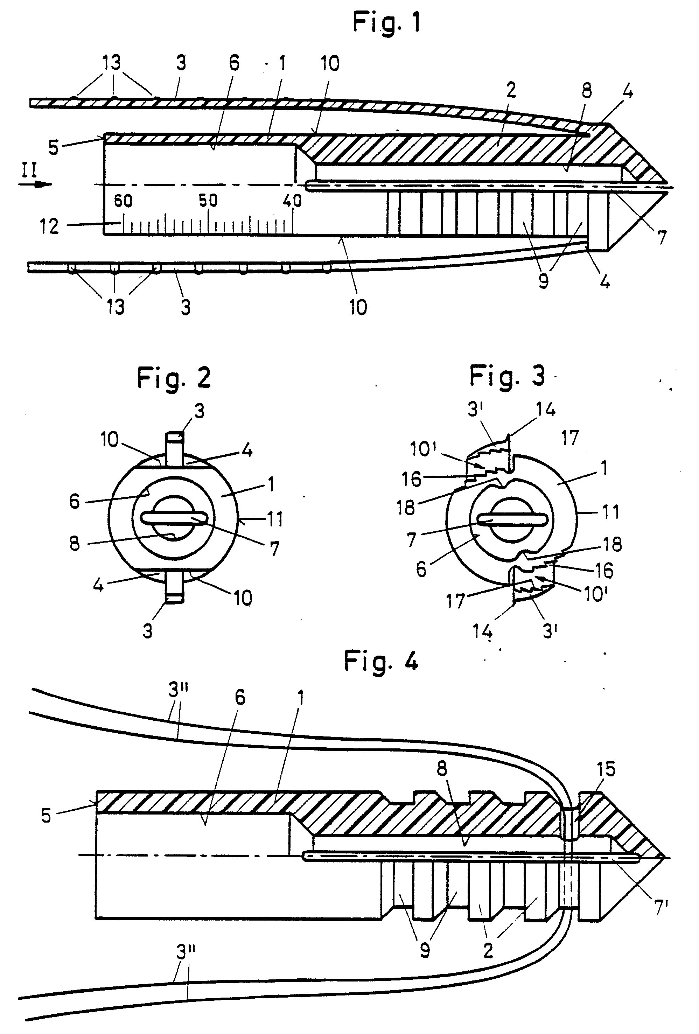

In Fig. 3 ist eine Variante der Ausführungsform nach Fig. 1 und 2 dargestellt. Der Grund der Ausnehmung 10' verläuft wiederum keilförmig gegen den Aussenumfang 11 des Dübels und geht in diesen tangential über. Die Sicherungselemente 3' haben jedoch zusätzlich eine kantige Längsrippe 14, welche an der Wand des Bohrlochs einhaken und beim allfälligen Durchdrehen des Dübels die Sicherungselemente 3' zurückhalten. Damit die Sicherungselemente 3' beim Zurückdrehen der Schraube nicht wieder in die Ausnehmung 10' zurückweichen, haben der Grund der Ausnehmung 10' und die diesem zugewandte Fläche des Sicherungselementes 3' korrespondierende sägezahnförmige Stufen 16, 17. Bei der Ausbildung des Dübels gemäss Fig. 3 brauchen die Sicherungselemente 3' das freie Ende 5 des Schaftes 1 nicht zu überragen. Die Innenfläche 6 des Schaftes 1 hat eine Verdickung 18 im Bereich der Ausnehmung 10', damit beim Einführen der Schraube der durch das Verschieben der Sicherungselemente 3' entstehende Hohlraum möglichst ausgefüllt wird.

In Fig. 4 ist eine weitere Ausführungsform dargestellt, bei welcher die Sicherungselemente 3'' fadenförmig sind. Ein oder mehrere Fäden 3'' werden durch eine Querbohrung 15 in den Spreizelementen 2 durchgesteckt. Die Fäden 3'' überragen wiederum das freie Ende 5 des Schaftes 1. Der Längsschlitz 7' reicht hier, im Unterschied zur Ausführungsform nach Fig. 1, nicht bis zum spitzen Ende des Dübels. Dies hat den Vorteil, dass sich beim Durchstecken des Dübels durch Mineralfasermatten kein Fasermaterial im Längsschlitz 7 verkeilen und die Spreizelemente 2 vorzeitig spreizen kann.

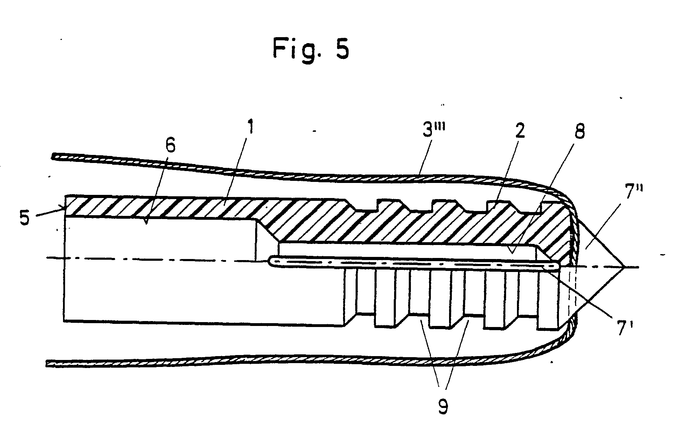

Eine Variante der Ausführungsform nach Fig. 4 ist in Fig. 5 dargestellt. Im Bereich des spitzen Endes der Spreizelemente 2 ist ein axialer Längsschlitz 7'' angeordnet, in welchem eine als Sicherungselement wirkende Kordel 3''' eingeklemmt ist. Die Kordel 3''' kann eine geschlossene Schlaufe sein, was ein Herausziehen des Dübels aus dem Bohrloch erleichtert. Auch bei den Ausführungsformen nach Fig. 1 und 3 können die Sicherungselemente 3 und 3' als geschlossene Schlaufe ausgebildet werden.

## Patentansprüche

1. Kunststoffspreizdübel mit einem Dübelkörper (1, 2), bestehend aus einem hülsenförmigen Schaft (1) und einem einstückig an den Schaft (1) angeformten Spreizelemente (2), und mit am Spreizelement (2) befestigten, von ihren Befestigungsstellen (4) gegen das freie Ende des Schaftes (1) gerichteten Sicherungselementen (3), dadurch gekennzeichnet, dass sich die Sicherungselemente mindestens über die halbe Länge des Dübels erstrecken, und dass die Sicherungselemente (3) in Umfangsrichtung biegeweich ausgebildet sind, derart, dass sich die Sicherungselemente (3) beim Durchdrehen des Dübels in einem Bohrloch in Umfangsrichtung relativ zum Dübelkörper (1, 2) verschieben.

2. Dübel nach Anspruch 1, dadurch gekennzeichnet, dass die Befestigungsstelle (4) der Sicherungselemente (3) benachbart dem freien Ende des Spreizelementes (2) an diesem angeordnet ist und dass die Sicherungselemente (3) bis mindestens in den Bereich des freien Endes des Schaftes (1) ragen.

3. Dübel nach Anspruch 1 oder 2, dadurch gekennzeichnet, dass die Sicherungselemente (3) band- oder fadenförmig sind.

4. Dübel nach einem der Ansprüche 1 bis 3, dadurch gekennzeichnet, dass zwischen der Befestigungsstelle (4) der Sicherungselemente (3) und dem freien Ende (5) des Schaftes (1) längsverlaufende Ausnehmungen (10) zur Aufnahme der Sicherungselemente (3) vorgesehen sind.

5. Dübel nach Anspruch 4, dadurch gekennzeichnet, dass der Grund der Ausnehmungen (10') auf einer Seite tangential in den Aussenumfang (11) des Dübels übergeht.

6. Dübel nach Anspruch 5, dadurch gekennzeichnet, dass der Grund der Ausnehmungen (10') und die dem Grund zugewandet Fläche der Sicherungselemente (3') korrespondierende sägezahnförmige Stufen (16, 17) aufweisen.

7. Dübel nach Anspruch 5 oder 6, dadurch gekennzeichnet, dass die Innenfläche (6) des Schaftes (1) im Bereich der Ausnehmungen (10') Verdickungen (18) aufweist.

8. Dübel nach einem der Ansprüche 1 bis 7, dadurch gekennzeichnet, dass er an dem vom Schaft (1) abgewandten Ende zugespitzt ist.

9. Dübel nach einem der Ansprüche 1 bis 8, dadurch gekennzeichnet, dass der Schaft (1) mehrere Längenmarkierungen (12) aufweist.

## Claims

1. An expanding plastics plug having a plug body (1, 2) comprising a sleeve-like shank (1) and an expanding element (2) integrally formed on the shank (1), and securing elements (3) secured to the expanding element (2) and extending towards the free end of the shank (1) from the place (4) where they are secured, characterised in that the securing elements extend at least over half the length of the plug, and that the securing elements (3) are made flexible in the peripheral direction so that, when the plug is rotated in a drill hole, the securing elements move in the peripheral direction relatively to the plug body (1, 2).

2. A plug according to claim 1, characterised in that the place (4) where the securing elements (3) are attached is near the free end of the expanding element (2) and disposed thereon, and the securing elements (3) project at least to near the free end of the shank (1).

3. A plug according to claim 1 or 2, characterised in that the securing elements (3) are in the form of strips or threads.

4. A plug according to any of claims 1 to 3, characterised in that longitudinal recesses (10) for receiving the securing elements (3) are formed between the free end (5) of the shank and the place (4) where the securing elements (3) are attached.

5. A plug according to claim 4, characterised in that the base of the recesses (10') merges tangentially into the outer periphery (11) of the plug on one side.

6. A plug according to claim 5, characterised in that the base of the recesses (10') and the surface of the securing elements (3') facing the base are formed with corresponding saw-like steps (16, 17).

7. A plug according to claim 5 or 6, characterised in that the inner surface (6) of the shank (1) has thick portions (18) near the recesses (10').

8. A plug according to any of claims 1 to 7, characterised in that it is pointed at the end remote from the shank (1).

9. A plug according to any of claims 1 to 8, characterised in that the shank (1) has a number of longitudinal marks (12).

**Revendications**

1. Piton à expansion en matière plastique comportant un corps de piton (1, 2), comprenant une tige (1) en forme de douille et un élément expansible (2) formé d'une seule pièce sur la tige (1), et comportant des éléments de blocage (3) fixés à l'élément expansible (2), s'étendant de leurs points de fixation (4) vers l'extrémité libre de la tige (1), caractérisé en ce que les éléments de blocage s'étendent au moins sur la moitié de la longueur du piton et sont conformés de façon à être flexibles en direction périphérique, de telle sorte que les éléments de blocage (3) se déplacent en direction périphérique par rapport au corps de piton (1, 2) lorsqu'on enfonce en tournant le piton dans un trou de perçage.

2. Piton selon la revendication 1, caractérisé en ce que le point de fixation (4) des éléments de blocage (3) est placé sur l'élément expansible (2) au voisinage de l'extrémité libre de cet élément expansible, et en ce que les éléments de blocage (3) vont au moins jusqu'au voisinage de l'extrémité libre de la tige (1).

3. Piton selon la revendication 1 ou 2, caractérisé en ce que les éléments de blocage (3) sont en forme de ruban ou de fil.

4. Piton selon l'une des revendications 1 à 3, caractérisé en ce qu'on prévoit entre le point de fixation (4) des éléments de blocage (3) et l'extrémité libre (5) de la tige (1) des creux longitudinaux (10) pour la réception des éléments de blocage (3).

5. Piton selon la revendication 4, caractérisé en ce que le fond des creux (10') se raccorde d'un côté tangentiellement à la périphérie extérieure (11) du piton.

6. Piton selon la revendication 5, caractérisé en ce que le fond des creux (10') et la surface des éléments de blocage (3') située du côté du fond comportent des gradins en dents de scie (16, 17) correspondants.

7. Piton selon la revendication 5 ou 6, caractérisé en ce que la surface intérieure (6) de la tige (1) comporte des épaississements (18) au voisinage des évidements (10').

8. Piton selon l'une des revendications 1 à 7, caractérisé en ce qu'il est effilé en pointe à l'extrémité opposée à la tige (1).

9. Piton selon l'une des revendications 1 à 8, caractérisé en ce que la tige (1) comporte plusieurs graduations longitudinales (12).

# Fig. 1

# Fig. 2

# Fig. 3

# Fig. 4

## Fig. 5